Europäisches Patentamt

European Patent Office

Office européen des brevets

(11) Veröffentlichungsnummer: **0 421 140 A2**

(12) **EUROPÄISCHE PATENTANMELDUNG**

(21) Anmeldenummer: **90117168.6**

(22) Anmeldetag: **06.09.90**

(51) Int. Cl.5: **B41M 5/035**, B32B 21/08, C08J 5/04, //C08L61:24, C08L61:28

(30) Priorität: **27.09.89 DE 3932139**

(43) Veröffentlichungstag der Anmeldung: **10.04.91 Patentblatt 91/15**

(84) Benannte Vertragsstaaten: **AT BE CH DE DK ES FR GB GR IT LI NL SE**

(71) Anmelder: **Nortech Chemie GmbH & Co. KG Bargkoppelweg 72 W-2000 Hamburg 73(DE)**

Anmelder: **CASSELLA Aktiengesellschaft Hanauer Landstrasse 526 W-6000 Frankfurt am Main 61(DE)**

(72) Erfinder: **Wisser, Siegfried Elbchaussee 163 W-2000 Hamburg(DE)**
Erfinder: **Adam, Wilhelm, Dr. Justus-v.-Liebig-Strasse 21 W-6078 Neu-Isenburg(DE)**
Erfinder: **Götze, Thomas, Dipl.-Ing. Hasenpfad 20 W-6232 Bad Soden am Ts.(DE)**

(74) Vertreter: **Weber, Dieter, Dr. et al Dr. Dieter Weber und Dipl.-Phys. Klaus Seiffert Patentanwälte Gustav-Freytag-Strasse 25 Postfach 6145 W-6200 Wiesbaden 1(DE)**

(54) Verfahren zum Dekorieren und Beschichten eines Substrates.

(57) Ein Verfahren zum Dekorieren und Beschichten eines Substrates mit einem gegebenenfalls modifizierten Melamin- und/oder Harnstoff-Formaldehyd-Harz durch Tränken eines von Fasern gebildeten Flächengebildes mit einer wäßrigen Lösung eines Vorkondensates des Harzes, Trocknen des Flächengebildes und Verpressen des getrockneten Flächengebildes unter Erwärmen und Druckausübung mit dem Substrat, wobei das Vorkondensat des Harzes auskondensiert, ist **dadurch gekennzeichnet**, daß man als Flächengebilde ein solches aus für sublimierbare Dispersionsfarbstoffe affinen Fasern verwendet und das Flächengebilde vor dem Tränken mit der wäßrigen Vorkondensatlösung nach dem Transferdruckverfahren durch Hitzebehandlung mit von einem Hilfsträger übertragenen sublimierbaren Dispersionsfarbstoffen bedruckt.

## VERFAHREN ZUM DEKORIEREN UND BESCHICHTEN EINES SUBSTRATES

Aus der DE-A-2 642 350 ist es bekannt, Flächengebilde, wie beispielsweise Holz, Metalle, Kunststoffe, Glas, Keramikmaterialien, Natur- und Kunststeinerzeugnisse oder dergleichen, nach dem sogenannten Transferdruckverfahren zu bedrucken. Da diese Materialien die im Transferdruckverfahren verwendeten sublimierbaren Dispersionsfarbstoffe nicht annehmen, werden die Substrate vor dem Transferdruck mit einer Oberflächenschicht eines Kunststofflackes versehen, der sich mit der Oberfläche des Substrates fest verbindet und die sublimierbaren Dispersionsfarbstoffe aufnimmt.

Das aufzudruckende Bild oder Muster wird mit Hilfe von sublimierbaren Dispersionsfarbstoffen zunächst auf einen Hilfsträger, insbesondere aus Papier, aufgedruckt. Sodann wird dieser auf die mit Kunststoff beschichtete Fläche als der bedruckten Seite aufgelegt, wonach durch Erhitzen, gegebenenfalls unter geringem Druck, die Dispersionsfarbstoffe von dem Hilfsträger in den Kunststofflack übertragen werden.

Ursprünglich wurden für dieses Verfahren als Kunststofflacke Thermoplasten verwendet, da man der Auffassung war, daß zur Aufnahme der Farbstoffe beim Umdruck die Kunststoffoberfläche erweicht werden müsse. Es zeigte sich jedoch. daß mit Thermoplasten gefertigte Drucke nicht wärmebeständig sind und daß bei Wärmeeinwirkung die Farbstoffe in der Thermoplastenschicht migrieren, so daß das Druckbild mit der Zeit verschwimmt und grau wird.

Die FR-A-2 230 794 und die DE-A-2 424 949 beschreiben ebenfalls ein Verfahren zum Bedrucken hitzebeständiger Flächengebilde, wie von Metallblechen oder Keramikkacheln, nach dem Transferdruckverfahren, wobei man das Substrat mit einem Epoxyharz beschichtet. Gemäß der GB-A-1 517 832 erfolgt die Beschichtung des Substrates im Transferdruckverfahren mit einem gehärteten ungesättigten Polyesterharz. Gemäß der DE-A-2 914 704 und der EP-A-0 014 901 wird das zu bedruckende Substrat mit einem vernetzten Duroplasten beschichtet, und als sublimierbare Dispersionsfarben werden solche mit relativ hohen Molekulargewichten zwischen 340 und 1000 verwendet. Dies hat den Vorteil, daß auch bei längerem und relativ hohem Erwärmen die umgedruckten Bilder beständig bleiben und praktisch keine Migration zeigen. Außerdem gelingt es mit diesem Verfahren, unter Anwendung sehr kurzer Umdruckzeiten, wie im Bandlackierverfahren, beim Umdruck eine ausreichende Übertragung der Farbstoffe zu bekommen.

Schließlich ist aus der DE-A-3 544 239 und der EP-A-0 226 818 ein Verfahren zum Bedrucken von Ledersubstraten nach der Transferdruckmethode bekannt, bei der die Lederoberfläche mit einer wäßrigen Lösung eines Vorkondensates eines Harnstoff-Aldehyd-Harzes oder Melamin-Aldehyd-Harzes imprägniert, das Lösungsmittel entfernt und schließlich unter gleichzeitigem Umdruck das Vorkondensat auskondensiert wird.

Melamin-Formaldehyd-Harze werden heute in großen Mengen zur Oberflächenbeschichtung bzw. Oberflächenveredelung von Span-oder zur Herstellung von Schichtstoffplatten verwendet. Hierzu werden Spezialpapiere mit wäßrigen Melamin-Formaldehyd-Vorkondensaten getränkt und hierauf in Trocknern bei ca. 160 °C getrocknet. Diese vorbehandelten Papiere werden dann mit Hilfe von beheizten Pressen direkt auf Spanplatten aufkaschiert oder mit anderen imprägnierten Papieren zu dekorativen Schichtstoffen verarbeitet. Dabei erhält man kratzfeste und witterungsbeständige Oberflächen, die für den Küchen- oder Möbelbau sowie für Verkleidungszwecke gut geeignet sind. Verwendet man in diesem Verfahren bedruckte Papiere, so kann man die Substrate mit dem Beschichten gleichzeitig dekorieren. Die Dekorationen sind aber stumpf und unbrillant und besitzen geringe Plastizität. Andererseits lassen sich derartige oberflächenbeschichtete bzw. oberflächenveredelte Span- oder Schichtstoffplatten nicht nach dem Transferdruckverfahren bedrucken, da die Melamin-Formaldehyd-Harzbeschichtungen für Dispersionsfarbstoffe nicht affin sind und sie daher nicht aufnehmen.

Dieses Problem versucht die DE-A-3 724 719 dadurch zu lösen, daß man das Melamin- und/oder Harnstoff-Formaldehyd-Harz mit einem Restgehalt an flüchtigen Bestandteilen von 4 bis 9 Gew.-% auf dem Substrat aufbringt, als Hifsträger ein gegen das Harz trennendes Bogenmaterial verwendet und bei der Hitzebehandlung mit der Übertragung der Dispersionsfarbstoffe gleichzeitig das im fließenden Zustand befindliche Melamin- und/oder Harnstoff-Formaldehydharz auskondensiert. Dieses Verfahren läßt sich in der Praxis jedoch schwerlich durchführen, da der Hilfsträger trotz sorgfältiger Auswahl beim Verpressen mit dem Substrat an diesem kleben bleibt und da auch bei diesem Verfahren nur ein relativ geringer Teil der Dispersionsfarbstoffe übertragbar ist und daher schwache und vielfach unscharfe Bilder ergibt.

Im Hinblick auf die ausgedehnte Verwendung von Melamin-Formaldehyd-Harzen, insbesondere in der Möbelindustrie, bestand somit die der Erfindung zugrundeliegende Aufgabe darin, beim gleichzeitigen Dekorieren und Beschichten von Substraten mit Melamin-Formaldehyd-Harzen und/oder Harnstoff-Formaldehyd-Harzen Erzeugnisse mit hoher Druckqualität, insbesondere Tiefenbrillanz und Plastizität zu bekommen.

Das erfindungsgemäße Verfahren zum Dekorieren und Beschichten eines Substrates mit einem gegebenenfalls modifizierten Melamin-und/oder Harnstoff-Formaldehyd-Harz durch Tränken eines von Fasern gebildeten Flächengebildes mit einer wäßrigen Lösung eines Vorkondensates des Harzes, Trocknen des Flächengebildes und Verpressen des getrockneten Flächengebildes unter Erwärmen und Druckausübung mit dem Substrat, wobei das Vorkondensat des Harzes auskondensiert, ist dadurch gekennzeichnet, daß man als Flächengebilde ein solches aus für sublimierbare Dispersionsfarbstoffe affinen Fasern verwendet und das Flächengebilde vor dem Tränken mit der wäßrigen Vorkondensatlösung nach dem Transferdruckverfahren durch Hitzebehandlung mit von einem Hilfsträger übertragenen sublimierbaren Dispersionsfarbstoffen bedruckt.

Überrschenderweise bekommt man nach diesem Verfahren Erzeugnisse, die einerseits die hohe Kratzfestigkeit und Witterungsbeständigkeit der genannten Harze haben, andererseits aber eine äußerst attraktive, da brillante und plastisch wirkende Dekoration aufweisen.

Als Faserflächengebilde kommen beliebige textile Substrate in Betracht, soweit sie für sublimierbare Dispersionsfarbstoffe affin sind. Zu nennen sind beispielsweise Wolle oder Seide, die vorab durch eine Imprägnierung für die Farbstoffe affin gemacht wurden, vor allem aber thermoplastische Kunststoffe, Polyester, Polyamide, Polyacrylnitril Celluloseacetat oder -triacetat, insbesondere Polyester. Die Flächengebilde können gewebte oder gewirkte Textilstoffe oder Faservliese sein. Bevorzugt verwendet man Gewebe.

Als Harze kommen veretherte oder unveretherte Melamin- und/oder Harnstoff-Formaldehyd-Harze in unmodifizierter oder modifizierter Form in Betracht. Soweit veretherte Harze benutzt werden, sind diese bevorzugt mit Methanol und Ethanol, besonders mit Methanol, verethert, da diese mit niedermolekularen Alkanolen veretherten Harze leichter wasserlöslich sind.

Die Modifizierung der Harze kann in der Zumischung von Additiven bestehen, die das Fließverhalten und die Oberflächengüte beeinflussen. Solche Modifiziermittel für Melamin- und Harnstoff-Formaldehyd-Harze sind in der Technik bekannt. Die Modifizierung kann auch darin bestehen, daß in das Melamin- und/oder Harnstoff-Formaldehyd-Harz ein gewisser Prozentsatz an Phenol-Formaldehyd-Harz einkondensiert ist oder daß ein bestimmter Prozentsatz des Melamins oder Harnstoffes durch Acetoguanamin (2,4-Diamono-6-methyltriazin) ersetzt ist. Ein übliche Modifizierung von Melaminharzen und Harnstoffharzen ist auch die durch Umsetzung mit Diethylenglycol oder Polyglycolen, wie Polyethylenglycol mit Molekulargewichten bis zu 1000.

Das Melamin- und/oder Harnstoff-Formaldehyd-Harz kann als solches oder mit anderen vernetzbaren Kunstharzen abgemischt vorliegen. Im letzteren Falle ist es in dem Gemisch in einer Menge von wenigstens 20 Gew.-% enthalten, da mit geringeren Mengen die Vorteile des Melamin- und/oder Harnstoff-Formaldehyd-Harzes hinsichtlich der mechanischen und chemischen Beständigkeit nicht erzielt werden. Als andere vernetzbare Kunstharze, mit denen das Harz vermischt werden kann, kommen beispielsweise Phenoplasten, Expoxyharze, Polyester, Polyphenylensulfidharze, Siliconharze, Acrylatharze, Alkydharze und/oder ungesättigte Polyesterharze in Betracht, wobei wasserunlösliche Kunstharze in wäßrige Dispersionen überführt werden müssen.

Um Erzeugnisse mit scharfen Druckbildern großer Plastizität zu bekommen, ist es zweckmäßig, eine oder mehrere Maßnahmen anzuwenden, die das Verlaufen der Druckfarben beim Verpressen mit dem Substrat unter Druckausübung verhindern.

Eine dieser Maßnahmen besteht darin, als Dispersionsfarbstoffe solche mit einem Molekulargewicht zwischen 340 und 1000, vorzugsweise zwischen 40 und 1000 zu verwenden, da diese eine geringere Migrationsneigung besitzen und beim Verpressen daher weniger leicht in dem bedruckten Flächengebilde bzw. auf dessen Oberfläche wandern. Bevorzugte Gruppen der erfindungsgemäß verwendeten Dispersionsfarbstoffe sind bestimmte Anthrachinon-, Monoazo- und Azomethinfarbstoffe, doch ist das Verfahren nicht auf diese Farbstoffgruppen beschränkt. Besonders bevorzugt sind Anthrachinon-, Monoazo- und Azomethinfarbstoffe, deren Moleküle stark mit Amino-, Alkoxy-, Oxalkyl-, Nitro-, Halogen-und Cyanogruppen besetzt sind. Diese Farbstoffgruppen sind im Colour-Index, Volume 1, Seiten 1655 bis 1742 definiert. Diesbezüglich wird auf die Seiten 9 bis 11 der EP-A-0 014 901 hingewiesen.

Eine andere Maßnahme zur Vermeidung des Verfließens der Druckbilder beim Verpressen des Flächengebildes mit dem Substrat, die stattdessen oder zusätzlich angewendet werden kann, besteht darin, daß man das Flächengebilde nach dem Bedrucken zunächst mit einer wäßrigen Melamin- und/oder Harnstoff-Formaldehyd-Vorkondensatlösung mit einer Konzentration von 5 bis 30 Gew.-% Vorkondensat vorimprägniert, sodann das Vorkondensat im wesentlichen auskondensiert und anschließend mit einer wäßrigen Melamin-Formaldehyd-Vorkondensatlösung tränkt, deren Vorkondensat gegebenenfalls bis zu 50 Gew.-% durch Harnstoff-Formaldehyd-Vorkondensat ersetzt sein kann und die eine 2gesamte Vorkondensatkonzentration von 35 bis 65 Gew.-% besitzt. Nach dem Tränken mit der letzteren Vorkondensatlösung erfolgt dann die übliche Weiterverarbeitung durch Trocknung und anschließendes Verpressen mit dem Substrat.

Das Vorimprägnieren muß zweckmäßig vor der Vereinigung des Flächengebildes mit dem Substrat erfolgen. Durch die Vorimprägnierung und das anschließende Auskondensieren des Vorkondensates ohne Preßdruck wird die Bedruckung des Flächengebildes fixiert, so daß durch die spätere Druckanwendung beim Verpressen mit dem Substrat die Farbstoffe nicht mehr in dem Flächengebilde oder auf dessen Oberfläche wandern können, so daß ein Verwaschen oder Auslaufen des Druckbildes verhindert wird.

Bei diesem zweistufigen Imprägnierverfahren verwendet man vorteilhafterweise für die Vorimprägnierung ein verethertes und/oder unverethertes Melamin- und/oder Harnstoff-Formaldehyd-Vorkondensat. Zweckmäßig benutzt man in dieser Vorimprägnierung ein verethertes Melaminharz, dem auch ein bestimmter Anteil an unverethertem Melaminharz zugesetzt werden kann, oder ein verethertes oder unverethertes Harnstoffharz.

In der zweiten Imprägnierstufe, die auf die Vorimprägnierung folgt, verwendet man zweckmäßig ein unverethertes Melamin-Formaldehyd-Vorkondensat, gegebenenfalls im Gemisch mit bis zu 50 Gew.-% eines Harnstoff-Formaldehyd-Vorkondensats.

Das Auskondensieren der Vorimprägnierung erfolgt drucklos, um ein Auswaschen der Farbstoffe zu vermeiden. Wie erwähnt, soll in dieser Stufe eine vollständige oder weitgehend vollständige Aushärtung des Druckkondensates erfolgen, um eine möglichst feste Fixierung der Farbstoffe auf dem Flächengebilde zu erreichen. Ein Maß für das Auskondensieren ist die Restfeuchte, gemessen als Gewichtsverlust während 5 min bei 160 °C. Zweckmäßig beträgt die Restfeuchte des Flächengebildes nach dem Auskondensieren der Vorimprägnierung höchstens 3, vorzugsweise höchstens 2 Gew.-%.

Nach dem Auskondensieren der Vorimprägnierung erfolgt dann die weitere Tränkung mit Melamin- und/oder Harnstoff-Formaldehyd-Vorkondensat und die anschließende Trocknung. Dabei arbeitet man zweckmäßig unter solchen Bedingungen, daß die zweite Imprägnierung vor dem Verpressen mit dem Substrat im wesentlichen drucklos ankondensiert wird, und zwar bis zu einer Restfeuchte gemessen unter den obigen Bedingungen, von 4,5 bis 7,5 Gew.-%. Diese Restfeuchte reicht aus, um beim Verpressen und dem dabei folgenden Auskondensieren die ausreichende Verbindung mit dem Substrat zu bekommen.

Eine weitere allein oder zusätzlich mit den anderen Maßnahmen anzuwendende Maßnahme zur Verhinderung eines Auswaschens von Farbstoffen beim Verpressen besteht darin, daß man ein Flächengebilde verwendet, das über seine gesamte Fläche im wesentlichen gleichmäßig dick ist, da bei unterschiedlichen Dicken während des Verpressens das Harz in die Bereiche geringerer Dicke fließt und dabei auf der Oberfläche des Flächengebildes befindliche Farbstoffteilchen mitnehmen kann.

Die Bedingungen beim Verpressen des Flächengebildes mit dem Substrat, der letzten Stufe im Verfahren, sind an sich üblich und richten sich auch nach den Substraten. Bevorzugte Restdrücke beim Verpressen liegen im Bereich von 15 bis 100 bar, wobei üblicherweise für das Dekorieren und Beschichten von Spanplatten Drücke im Bereich von 15 bis 25 bar, für das Dekorieren von Schichtstoffen zweckmäßig 25 bis 100 bar angewendet werden.

Die Temperaturen beim Verpressen liegen zweckmäßig im Bereich von 130 bis 170 °C. Die Verpreßzeiten hängen von den verwendeten Maschinen ab und liegen gewöhnlich zwischen 10 und 90, vorzugsweise zwischen 15 und 75 sec., gegebenenfalls werden, bei Preßzyklen mit Rückkühlung, auch längere Preßzeiten benötigt. Für das Verpressen können beispielsweise Ein- oder Mehretagenpressen oder Doppelbandpressen, wie sie für die kontinuierliche Spanplattenbeschichtung oder zur Herstellung von Endloslaminaten üblich sind, verwendet werden. Besonders brauchbar ist das vorliegende Verfahren für die dekorative Oberflächenveredelung von Holzwerkstoffen, wie z.B. Spanplatten, Sperrholz oder MDF, sowie zur Herstellung von dekorativen Schichtstoffen nach dem HPL-oder CPL-Verfahren.

Die Verfahrensbedingungen beim Transferdruckverfahren sind die aus dem Stand der Technik bekannten Verfahrensbedingungen der Hitze- und gegebenenfalls Druckanwendung. Gewöhnlich erfolgt der Transferdruck bei Temperaturen zwischen 170 und 270, vorzugsweise zwischen 200 und 260 °C. Die Bedruckung ist auf ebenen wie auch gewölbten Flachen möglich. Die folgenden Beispiele dienen der weiteren Erläuterung der Erfindung.

Beispiel 1

Ein Polyestergewebe (Trevira-Twill) mit einem Flächengewicht von 50 bis 53 g/m² wurde im Transferdruckverfahren mit sublimierbaren Dispersionsfarbstoffen von einem Hilfsträger bei 220 °C bedruckt. Die Farbstoffe waren C. I. DY 201 (gelber Farbstoff) mit einem Molekulargewicht von 408, C. I. DR 343 (roter Farbstoff) mit einem Molekulargewicht von 415 und C. I. DB 165,1 (blauer Farbstoff) mit einem Molekulargewicht von 425.

Zur Vermeidung von Auswaschungen beim späteren Verpressen wurde die bedruckte Gewebebahn zunächst mit der folgenden Tränkflotte vorinprägniert:

| | |
|---|---|
| Melamin-Formaldehyd-Vorkondensat (Madurit VMW 3818 der Firma Hoechst AG ca. 75 %ig in Wasser) | 100,0 Gewichtteile |
| Wasser | 275,0 Gewichtsteile |
| anionisches Netzmittel (Hypersal XT 790) der Firma Hoechst AG) | 1,8 Gewichtsteile |
| Härter (p-Toluolsulfonsäure) | 6,0 Gewichtsteile |

Die Trocknung des so vorimprägnierten Gewebe erfolgte in einem Umluft-Schwebetrockner bei 130 bis 150 °C. Nach dem Trocknen lag das Endgewicht bei etwa 65 g/m$^2$ und die Restfeuchte (gemessen als Gewichtsverlust während 5 min bei 160 °C - VC-Wert) bei etwa 2 Gew.-%.

Die so ausgerüstete Gewebebahn wurde nunmehr mit folgender Tränkflotte getränkt:

| | |
|---|---|
| Melamin-Formaldehyd-Vorkondensat (Madurit MW 484 der Firma Hoechst AG, etwa 57 %ige Lösung in Wasser) | 100,0 Gewichtsteile |
| Härter (Madurit-Härter MH 835 der Firma Hoechste AG) | 0,5 Gewichtsteile |
| anionisches Netzmittel (Hypersal XT 790) der Firma Hoechst AG) | 0,3 Gewichtsteile |

Die Trocknung der so nachimprägnierten Gewebebahn erfolgte in einem Umluftschwebetrockner bei 130 bis 150 °C bis zu einem Endgewicht von etwa 145 g/m$^2$ und einer Restfeuchte (VC-Wert) von 5,5 bis 6.0 Gew.-%. Die imprägnierter Gewebebahn erwies sich als klebfrei, gut handhabbar und rollfähig. Die Verpressung erfolgte bei den nachfolgenden Bedingungen unter Verwendung von Holzspanplatten und handelüblichen Phenolkernpapieren für HPL.

a) Auf Holzspanplatten

Temperatur am Objekt 130 bis 150 °C

Druck 20 bar

Preßzeit 60 sec

Preßbleche aus verchromtem Messing, hochglänzend

b) Auf Phenolkernpapieren HPL

Temperatur am Objekt maximal 135 °C

Druck 80 bis 100 bar

Preßzeit 15 min

mit anschließender Rückkühlung

Preßfläche aus verchromtem Messing, hochglänzend

In beiden Fällen wurde zur optischen Neutralisierung des Untergrundes ein weißes Dekorpapier als Unterlagspapier verwendet, das mit der gleichen Tränkflotte wie für die Nachimprägnie rung imprägniert war. Dieses Dekorpapier hatte ein Rohgewicht von etwa 80 g/m$^2$, ein Endgewicht nach dem Imprägnieren von etwa 180 g/m$^2$ und eine Restfeuchte (VC-Wert) nach dem Imprägnieren von etwa 6 Gew.-%.

Die erhaltenen dekorierten und beschichteten Produkte hatten gute Oberflächeneigenschaften und ein brillantes, plastisch wirkendes Dekor.

Beispiel 2

Das gleiche Polyestergewebe wie im Beispiel 1 wurde wie in Beispiel 1 bedruckt und vorimprägniert. Die anschließende Imprägnierung oder Beharzung erfolgte mit folgender Tränkflotte:

| Modifiziertes Melamin-Formaldehyd-Vorkondensat (Madurit VMW 3284 der Firma Hoechst AG, 57 %ige Lösung in Wasser) | 100,0 Gewichtsteile |
|---|---|
| Härter (Madurit-Härter MH 835 der Firma Hoechst AG) | 0,3 Gewichtsteile |
| anionisches Netzmittel (Hypersal XT 790) | 0,3 Gewichtsteile |

Die Trocknung der beharzten Gewebebahn erfolgte wie im Beispiel 1. Das Endgewicht lag bei etwa 143 g/m², die Restfeuchte (VC-Wert) bei etwa 5,5 bis 6,0. Die erhaltenen Imprägnate waren klebfrei, gut zu handhaben und rollfähig.

Als Substrate wurden wie im Beispiel 1 Holzspanplatten und Phenolkernpapiere für HPL verwendet. Zur optischen Neutralisierung wurde wie im Beispiel 1 imprägniertes weißes Dekorpapier verwendet.

In allen Fällen wurden auf Spanplatten fast hochglänzende, auf Hochdruckschichtstoffen mit Rückkühlung hochglänzende Oberflä chen erhalten. Diese hatten hohe Abriebbeständigkeit, Kratzfestigkeit und Chemikalienbeständigkeit und zeigten bei Verwendung lichtechter Pigmente gute Wetterbeständigkeit für Außenanwendungen.

Entsprechende Versuche wurden auch mit Polyamid- und Polyacrylnitrilgeweben durchgeführt, wobei dekorierte und beschichtete Erzeugnisse erhalten wurden, deren Eigenschaften mit jenen der Erzeugnisse der Beispiele 1 und 2 vergleichbar waren.

**Ansprüche**

1. Verfahren zum Dekorieren und Beschichten eines Substrates mit einem gegebenenfalls modifizierten Melamin-und/oder Harnstoff-Formaldehyd-Harz durch Tränken eines von Fasern gebildeten Flächengebildes mit einer wäßrigen Lösung eines Vorkondensates des Harzes, Trocknen des Flächengebildes und Verpressen des getrockneten Flächengebildes unter Erwärmen und Druckausübung mit dem Substrat, wobei das Vorkondensat des Harzes auskondensiert, **dadurch gekennzeichnet,** daß man als Flächengebilde ein solches aus für sublimierbare Dispersionsfarbstoffe affinen Fasern verwendet und das Flächengebilde vor dem Tränken mit der wäßrigen Vorkondensatlösung nach dem Transferdruckverfahren durch Hitzebehandlung mit von einem Hilfsträger übertragenen sublimierbaren Dispersionsfarbstoffen bedruckt.

2. Verfahren nach Anspruch 1, **dadurch gekennzeichnet,** daß man ein Flächengebilde aus einem thermoplastischen Kunststoff, vorzugsweise einem Polyester, Polyamid oder Polyacrylnitril, besonders aus einem Polyester, verwendet.

3. Verfahren nach Anspruch 1 oder 2, **dadurch gekennzeichnet,** daß man das Flachengebilde nach dem Bedrucken zunächst mit einer wäßrigen Melamin- und/oder Harnstoff-Formaldehyd-Vorkondensatlösung einer Konzentration von 5 bis 30 Gew.-% vorimprägniert, sodann das Vorkondensat im wesentlichen auskondensiert und anschließend mit einer wäßrigen Melamin-Formaldehyd-Vorkondensatlösung, deren Vorkondensat gegebenenfalls bis zu 50 Gew.-% durch ein Harnstoff-Formaldehyd-Vorkondensat ersetzt ist und die eine Vorkondensatkonzentration von 35 bis 65 Gew.-% besitzt, tränkt.

4. Verfahren nach Anspruch 3, **dadurch gekennzeichnet,** daß man für die Vorimprägnierung ein verethertes und/oder unverethertes Melamin- und/oder Harnstoff-Formaldehyd-Vorkondensat verwendet.

5. Verfahren nach Anspruch 3 oder 4, **dadurch gekennzeichnet,** daß man für die anschließende Tränkung ein unverethertes Melamin-Formaldehyd-Vorkondensat, gegebenenfalls im Gemisch mit bis zu 50 Gew.-% Harnstoff-Formaldehyd-Vorkondensat, verwendet.

6. Verfahren nach einem der Ansprüche 3 bis 5, **dadurch gekennzeichnet,** daß man das vorimprägnierte Flächengebilde bis zu einer Restfeuchte (als Gewichtsverlust während 5 min bei 160 °C) von höchsten 3, vorzugsweise höchstens 2 Gew.-% im wesentlichen drucklos auskondensiert.

7. Verfahren nach einem der Ansprüche 3 bis 6, **dadurch gekennzeichnet,** daß man nach der anschließenden Tränkung, vor dem Verpressen mit dem Substrat bis zu einer Restfeuchte (als Gewichtsverlust während 5 min bei 160 °C) von 4,5 bis 7,5 Gew.-% im wesentlichen drucklos kondensiert.

8. Verfahren nach einem der Ansprüche 1 bis 7, **dadurch gekennzeichnet,** daß man als verethertes Vorkondensat ein mit Methanol oder Ethanol, besonders Methanol, verethertes Vorkondensat verwendet.

9. Verfahren nach einem der Ansprüche 1 bis 8, **dadurch gekennzeichnet,** daß man das Flächengebilde mit dem Substrat bei einem Druck von 5 bis 100 bar verpreßt.

10. Verfahren nach einem der Ansprüche 1 bis 9, **dadurch gekennzeichnet,** daß man das Flächengebilde mit dem Substrat bei einer Temperatur von 130 bis 170 °C verpreßt.

11. Verfahren nach einem der Ansprüche 1 bis 10, **dadurch gekennzeichnet**, daß man das Flächengebilde mit dem Substrat während einer Zeit von 10 bis 90, vorzugsweise von 15 bis 75 sec verpreßt, gegebenenfalls bei verlängerten Preßzeiten mit Ruckkühlung.

12. Verfahren nach einem der Ansprüche 1 bis 11, **dadurch gekennzeichnet,** daß man als Dispersionsfarbstoffe solche mit einem Molekulargewicht zwischen 340 und 1000, vorzugsweise zwischen 400 und 1000 verwendet.

13. Verfahren nach einem der Ansprüche 1 bis 12, **dadurch gekennzeichnet,** daß man ein über seine gesamte Fläche im wesentlichen gleichmäßig dickes Flächengebilde verwendet.

14. Verfahren nach einem der Ansprüche 1 bis 13, **dadurch gekennzeichnet,** daß man als Flächengebilde ein Gewebe, Gewirke oder Vlies verwendet.